# EUROPEAN PATENT SPECIFICATION

(11) **EP 4 607 947 B1**
(45) Date of publication and mention of the grant of the patent: **09.12.2026**
(21) Application number: 22962665.0
(22) Date of filing: 17.10.2022
(51) Int. Cl.: H04Q 9/00, H04L 67/12, H04L 65/40, H04L 65/60

(54) **PROGRAM, SERVER DEVICE, AND METHOD FOR TRANSFERRING DATA STREAM**
PROGRAMM, SERVERVORRICHTUNG UND VERFAHREN ZUR ÜBERTRAGUNG EINES DATENSTROMS
PROGRAMME, DISPOSITIF SERVEUR, ET PROCÉDÉ DE TRANSFERT DE FLUX DE DONNÉES

(43) Date of publication of application: 27.08.2025
(73) Proprietor: Aptpod, Inc., Tokyo 160-0004 (JP)
(72) Inventor: IWATA, Ryosuke, Tokyo 160-0004 (JP)
(74) Representative: Bandpay & Greuter
(86) International application number: PCT/JP2022/038633
(87) International publication number: WO 2024/084553

(56) References cited:
- WO-A1-2005/027439
- WO-A1-2009/028855
- JP-A- 2010 004 186
- US-A1- 2007 033 609
- US-A1- 2019 238 546

## Description

### Technical Field

The present disclosure relates to a technology for transmitting data.

### Background Art

In data transmission between a server device and a client device, there is a known technology to create and transmit a section that contains data acquired by the client device, and SOS (Start of Section) and EOS (End of Section) indicating the separation of the section (see, for example, Patent Document 1).

### Citation List

### Patent Literature

Patent Literature 1: WO 2018/78913A

<<Insert p. 1a here>>

### Summary of Invention

### Technical Problem

However, in the technology described in Patent Document 1, a section has a data structure using markers indicating separation from other sections, and thus, if any marker is lost during transmission or if the order of the markers changes, the section structure will be broken. To maintain the section structure, it is necessary to guarantee data arrival and the order of data using a lower-level protocol, which limits data transmission.

An object of the present invention is to enable a data structure to
Also known in the art is the patent application US 2007/033609 A1, which discloses a media stream transmission method for transmitting a plurality of media streams. Such method comprises coupling a plurality of information units for transmitting the respective media streams into a single packet and multicasting said packet. be maintained even if data is lost or the order of data changes during communication in a streaming format.

### Solution to Problem

An aspect of the present disclosure provides: a program for causing a computer to execute a communication step of performing communication in a streaming format with a client device, wherein the communication in the streaming format is performed using a data block that contains a plurality of data groups, and each of the plurality of data groups contains data-type information and at least one data point that is associated with the data-type information and that is acquired by the client device.

The communication step may include a receiving step of receiving a plurality of data streams from a first client device, and an amount of data in the data block included in each of the plurality of data streams may differ depending on the plurality of data streams.

The communication step may include a receiving step of receiving a plurality of data streams from a first client device, the plurality of data streams may have different transmission conditions, and each of the plurality of data streams may include at least one data point that corresponds to a transmission condition of each data stream.

The communication step may include a receiving step of receiving a data stream from a first client device, the data stream may have a transmission condition, and when reception of a first data block included in the data stream is not confirmed, the first data block may be re-transmitted from the first client device at a timing that differs depending on the transmission condition of the data stream.

The communication step may include a receiving step of receiving a data stream from a first client device, and a transmitting step of transmitting the data stream to a second client device, the data block may contain a sequence number consecutive in order of transmission of the data block from the first client device, data loss on a first communication path between the computer and the first client device or the second client device may be determined based on presence or absence of an acknowledgment that is returned in response to reception of the data block, and data loss on a second communication path from the first client device to the second client device via the computer may be determined using the sequence number.

The client device may include a first client device configured to transmit a data stream to the computer, and a second client device configured to receive the data stream transferred from the computer, the communication step may include: a transmitting step of transmitting, in the communication between the first client device and the computer, a first dictionary used for conversion between the data-type information and a first alias value, to the first client device; and a receiving step of receiving, in the communication between the computer and the second client device, a second dictionary used for conversion between the data-type information and a second alias value, from the second client device.

The communication step may include a receiving step of receiving a plurality of data streams from a first client device, the plurality of data streams may include: a first data stream that has a first transmission condition that prioritizes real-time performance in data transmission; and a second data stream that has a second transmission condition that prioritizes integrity in data transmission, when transmission of the first data stream from the first client device is stopped according to a bandwidth of a communication path between the computer and the first client device and then the transmission is restarted, the transmission of the first data stream may be performed from a data portion that corresponds to a point in time when the transmission is restarted, and when transmission of the second data stream from the first client device is stopped according to the bandwidth and then the transmission is restarted, the transmission of the second data stream may be performed from a data portion that corresponds to a point in time when the transmission is stopped.

The communication step may include a receiving step of receiving a data stream from a first client device, and the program may be configured to cause the computer further to execute an adding step of adding information regarding communication between the computer and the first client device to the data block included in the data stream received in the receiving step.

Another aspect of the present disclosure provides: a server device including: a communication means for performing communication in a streaming format with a client device, wherein the communication in the streaming format is performed using a data block that contains a plurality of data groups, and each of the plurality of data groups contains data-type information and at least one data point that is associated with the data-type information and that is acquired by the client device.

Yet another aspect of the present disclosure provides: a data stream transmission method including: a communication step of performing communication in a streaming format with a client device, wherein the communication in a streaming format is performed using a data block that contains a plurality of data groups, and each of the plurality of data groups contains data-type information and at least one data point that is associated with the data-type information and that is acquired by the client device.

### Advantageous Effects of Invention

According to the present disclosure, it is possible to enable a data structure to be maintained even if data is lost or the order of data changes during communication in a streaming format.

### Brief Description of Drawings

FIG. 1 is a diagram showing an example of a data communication system according to an embodiment.
FIG. 2 is a diagram showing an example of a functional configuration of the data communication system.
FIG. 3 is a diagram showing an example of a data structure of a chunk.
FIG. 4 is a diagram showing an example of a hardware configuration of a client device.
FIG. 5 is a diagram showing an example of a hardware configuration of a server device.
FIG. 6 is a sequence chart showing an example of stream starting processing.
FIG. 7 is a diagram showing an example of an upstream dictionary.
FIG. 8 is a diagram showing an example of a downstream dictionary.
FIG. 9 is a sequence chart showing an example of processing for transmitting a data stream.
FIG. 10 is a diagram illustrating an example of sorting of data points.
FIG. 11 is a diagram showing an example of transmission of data streams.
FIG. 12 is a flow chart showing an example of processing for re-transmitting a chunk.
FIG. 13 is a diagram illustrating an example of processing for determining whether or not data is lost on a two-way communication path.
FIG. 14 is a flow chart showing an example of processing for limiting the amount of data transmission according to bandwidth.

### Description of Embodiments

### Reference Signs List

1 ...Data communication system, 10 ... Sensor, 20 ... Client device, 21 ... Processor, 22 ...Memory, 23 ...Communication interface, 24 ...Input device, 25 ...Output device, 30 ...Server device, 31 ...Processor, 32 ...Memory, 33 ...Communication interface, 201 ...Start request means, 202 ...Acquisition means, 203 ...Sorting means, 204 ...Conversion means, 205 ...Generation means, 206 ...Transmission means, 207 ...Re-transmission means, 208 ...Transmission limiting means, 211 ...Alias means, 212 ...Start request means, 213 ...Receiving means, 214 ...Conversion means, 215 ...Output control means, 216 ...Loss determination means, 221 ...Client program, 222 ...Dictionary, 301 ...Alias means, 302 ...Start response means, 303 ...Receiving means, 304 ...Conversion means, 305 ...Adding means, 306 ...Transmission means, 307 ...Acknowledgment means, 321 ...Server program

### Description of Embodiments

### 1. Configuration

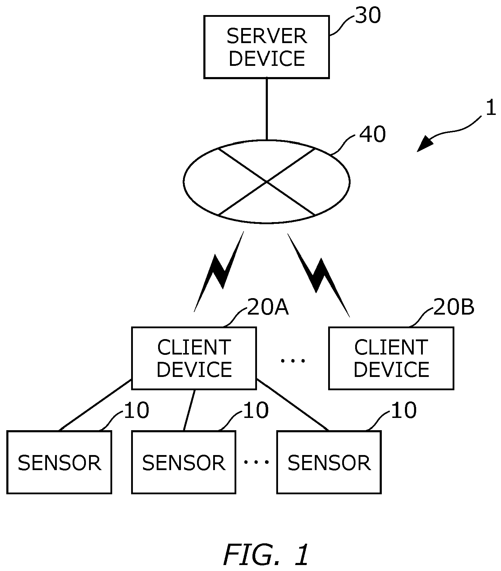

FIG. 1 is a diagram showing an example of data communication system 1 according to an embodiment. Data communication system 1 includes multiple client devices 20 and server device 30. Multiple client devices 20 include client device 20A, which has the transmitting function, and client device 20B, which has the receiving function. Multiple sensors 10 are connected to client device 20A. Multiple client devices 20 and server device 30 are connected to each other via network 40. Network 40 includes, for example, a mobile communication network and the Internet.

Sensors 10 observe an object at constant or desired non-uniform time intervals and output data obtained by the observation. For example, if the observation object is an automobile, sensors 10 may include at least one of an accelerator sensor, a brake sensor, a steering sensor, a speedometer, an engine tachometer, a fuel injection gauge, a thermometer, a GPS (Global Positioning System), and a camera.

Client device 20A transmits the data output from sensors 10 to the server device 30 in real time through communication in a streaming format. Server device 30 transfers the data received from client device 20A to client device 20B in real time through communication in a streaming format. In this context, "communication in a streaming format" refers to performing at least one of transmission and reception with respect to client device 20 using data streams. In other words, data streams are used to perform communication in a streaming format. In this context, "data stream" refers to a flow of consecutive data. Server device 30 transfers data to client device 20B, and stores the data. The data stored in server device 30 will be used later for analysis of the observation object, for example, so data integrity is required. Client device 20B outputs the data received from server device 30 in real time. In this way, the data transferred from server device 30 to client device 20B is used for, e.g., remote monitoring, remote diagnosis, remote operation, and the like to recognize or control the current situation of the observation object from a remote location. The data transfer may have different requirements depending on the application, such as the requirement for low-delay transmission while tolerating loss (where priority is given to real-time performance over integrity) or the requirement for transmission without loss while tolerating delay (where priority is given to integrity over real-time performance). Note that in the following description, the flow of data transmitted from client device 20A to server device 30 is referred to as "upstream" and the flow of data transmitted from server device 30 to client device 20B is referred to as "downstream."

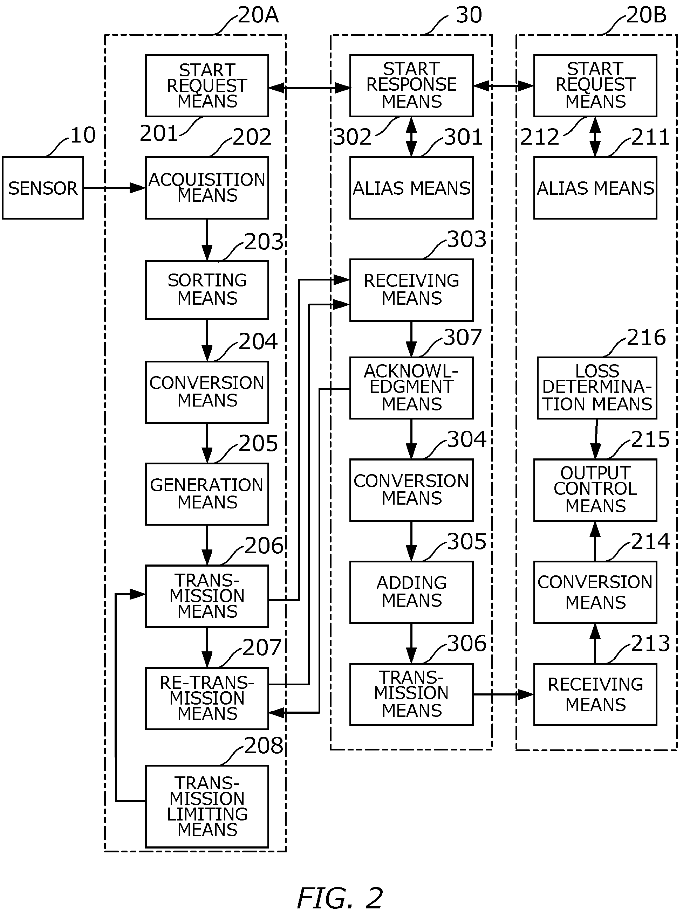

FIG. 2 is a diagram showing an example of a functional configuration of data communication system 1. Client device 20A functions as start request means 201, acquisition means 202, sorting means 203, conversion means 204, generation means 205, transmission means 206, re-transmission means 207, and transmission limiting means 208. Client device 20A is an example of a first client device according to the present disclosure.

Start request means 201 transmits an upstream start request to server device 30 at the start of upstream transmission. When requesting the creation of an alias for the data ID of data to be transmitted in the upstream transmission, the upstream start request also serves as an alias request. If the upstream start request also serves as an alias request, the upstream start request includes a data ID list. This data ID list contains a data ID for which an alias is to be created. If there are a plurality of data IDs for which aliases are to be created, the data ID list will contain a plurality of data IDs. Each data ID consists of a data name and a data type. The data ID is an identifier that uniquely identifies the data. The data name is a name assigned to the data. The data type is type information that indicates the content and format of the data. Desired character strings are used for the data name and the data type.

Acquisition means 202 acquires multiple data sequences output from multiple sensors 10. A data sequence is, for example, a series of data bodies arranged in time series. A data body, also called payload or data binary, is the main body of data excluding additional information. For example, a data sequence output from the accelerator sensor contains the amount of accelerator operation as the data body. One data body contains the amount of operation of one accelerator. When one sensor 10 outputs a plurality of values, such as when, for example, speeds of acceleration for three axes are output simultaneously from an acceleration sensor, one data body may contain a plurality of values. If the data sequence does not contain time information, acquisition means 202 adds time information to each data body contained in the data sequence. Time information is, for example, a time stamp, and indicates a clock time point associated with the data body. The time information indicates the clock time at which the data was acquired by acquisition means 202, for example. In this case, the time information may be expressed in terms of elapsed time from the time and date when the observation was started to the time and date when the data was acquired. Also, the time information is not limited to the clock time when the data was acquired, but may also indicate the clock time when the data was generated or the clock time when the data occurred. The set of the data body and the time information constitutes a data point. In this context, "data point" refers to data associated with a certain clock time point. Note that the time information may be added on sensor 10 side. In this case, the data sequence output from sensors 10 is a series of sets of data body and time information.

Also, acquisition means 202 adds a data ID to each data point. A data ID is information that indicates the type of data and is an example of data-type information according to the present disclosure. Note that the data-type information is not limited to a data ID, but may be other information such as a sensor ID, as long as it indicates the type of data. A data point is a concept that has data-type information, data body, and time information in a narrow sense, but as described below, when data points are unified into a data point group for efficiency, the data-type information of individual data points is collected into the data-type information of the data point group. Note that acquisition means 202 does not need to assign a data ID and time information to all of the data points output from multiple sensors 10, but may discard some of the data points.

Sorting means 203 sorts the data points acquired by acquisition means 202 to a plurality of data streams based on configuration information. The plurality of data streams has different predetermined transmission conditions. In this embodiment, each of the transmission conditions includes information on whether or not data transmitted in the data stream is stored in server device 30, the transmission frequency and maximum data volume of data blocks, QoS (Quality of Service) representing the characteristics and performance of services on the data stream, and the like. Note that the transmission conditions are not limited to these conditions, and may include other conditions. QoS includes unreliable and reliable. Unreliable is a condition where data may be lost but is transmitted without delay. Unreliable is a transmission condition that prioritizes real-time performance over integrity of data transmission, and is an example of a first transmission condition according to the present disclosure. Reliable is a condition where data may be delayed but is transmitted without loss. Reliable is a transmission condition that prioritizes integrity over real-time performance of data transmission, and is an example of a second transmission condition according to the present disclosure. Note that QoS may include types other than unreliable and reliable. One type of QoS that includes unreliable and reliable is defined for each data stream. In the configuration information, a sorting destination of each data point is set based on the transmission condition of the data stream. The configuration information is created, for example, by the administrator of server device 30, and is stored in memory 22 of client device 20Ain advance. For example, in the configuration information, the sorting destination of continuous value data that can be easily complemented from the previous and next values even if there is data loss, such as control information and analog signals that require real-time performance in data transmission, is set to a data stream whose QoS is unreliable. On the other hand, in the configuration information, the sorting destination of sequential time-series data that requires integrity in data transmission or non-continuous value data that is difficult to be complemented, such as character string messages, is set to a data stream whose QoS is reliable. Note that a plurality of data points to be sorted may include data points that cannot be sorted to any data stream.

Conversion means 204 converts the data ID contained in a data point into an alias value. The alias value is a numeric value used in place of the data ID at the time of data transmission. In the upstream transmission, the alias value is assigned by server device 30 in response to an alias request from client device 20A. As described above, since desired character strings are used for data names and data types, using a numerical alias value in place of them reduces the amount of data and can improve transmission efficiency. Note that the data type of information used as an alias value is not limited to numerical values, but can be, for example, desired short string.

Generation means 205 generates chunks that make up a data stream. Each data stream contains a plurality of chunks. A data stream is subjected to processing such as transmission, reception, and re-transmission in units of chunks. A chunk is an example of a data block according to the present disclosure.

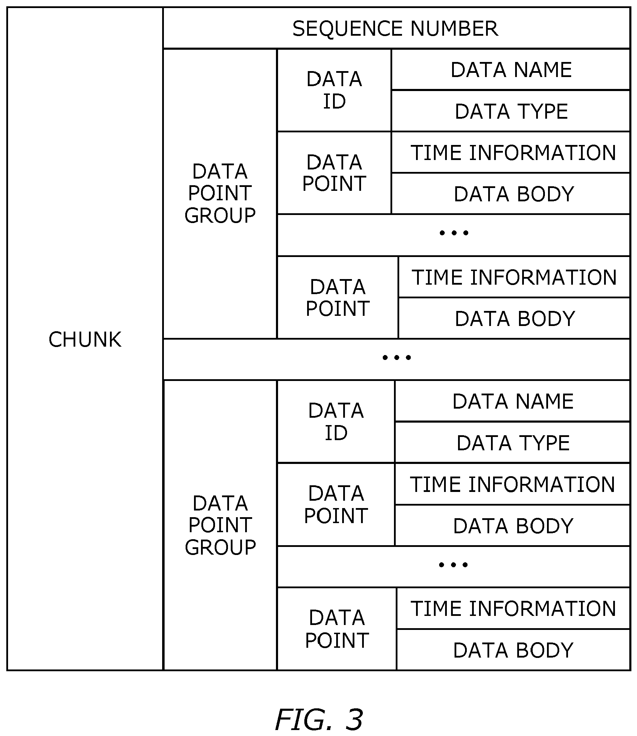

FIG. 3 is a diagram showing an example of a data structure of a chunk. Each chunk contains a sequence number and a plurality of data point groups. The sequence number is a non-negative integer indicating the order of transmission in the same data stream from client device 20A. To a plurality of chunks contained in the same data stream, consecutive sequence numbers are assigned in the order of their transmission. A data point group refers to a unit of multiple data points that have the same data-type information. In this example, a data point group is a group of data points that have the same data ID. A data point acquired by acquisition means 202 belongs to the data point group corresponding to its data ID. The data point group is an example of a data group according to the present disclosure. Each data point group includes a data ID and at least one data point. The data ID is an identifier that uniquely identifies data points belonging to the corresponding data point group. As described above, a data ID consists of a data name and a data type. A data point is a set of data body and time information that belongs to the corresponding data point group.

Returning to FIG. 2, transmission means 206 transmits a data stream to server device 30 using chunks generated by generation means 205, through communication in a streaming format. For example, a data stream is continuously generated data, such as consecutive measurement values, that includes time information such as time stamps. Transmission means 206 may transmit a plurality of data streams. Transmission means 206 can use protocols such as UDP (User Datagram Protocol), which does not guarantee data arrival but is suitable for real-time transmission, TCP (Transmission Control Protocol), which guarantees data arrival, WebSocket, and QUIC, which can switch between guaranteed arrival and unguaranteed arrival, as lower-level communication protocols.

Re-transmission means 207 re-transmits, to server device 30, a chunk that is not confirmed to have been received at server device 30 among the plurality of chunks contained in the data stream transmitted by transmission means 206. However, re-transmission means 207 varies the timing of re-transmission depending on the QoS of the data stream to which the target chunk belongs. If the QoS of the data stream to which the target chunk belongs is unreliable, re-transmission means 207 re-transmits the target chunk at a predetermined timing that does not interfere with the transmission of subsequent chunks, for example, when a spare communication bandwidth is available or an instruction is given by the user. This is because a data stream whose QoS is unreliable requires real-time performance in data transmission, and thus if a chunk is not received, it is preferable to give priority to transmitting subsequent chunks without delay rather than re-transmitting that chunk. On the other hand, if the QoS of the data stream to which the target chunk belongs is reliable, re-transmission means 207 re-transmits the target chunk as soon as it is recognized that the chunk was not received. This is because a data stream whose QoS is reliable requires integrity in data transmission, and thus if a chunk is not received, it is preferable to ensure that all chunks are transmitted even if the transmission of subsequent chunks is slightly delayed by sharing the bandwidth with the subsequent chunks.

Transmission limiting means 208 stops or restarts the transmission of a data stream according to the bandwidth of the communication path between client device 20A and server device 30. When the bandwidth of the communication path between client device 20A and server device 30 is insufficient, transmission limiting means 208 stops the transmission of the data stream. Subsequently, if the bandwidth shortage in the communication path between client device 20A and server device 30 is resolved, transmission limiting means 208 restarts the transmission of the data stream. Note, however, that the content of data to be transmitted after the transmission has been restarted depends on the QoS of the data stream. If the QoS of the data stream is unreliable, transmission limiting means 208 transmits, upon restart of the transmission of the data stream, this data stream from the latest chunk at the time when the transmission is restarted. For a data stream whose QoS is unreliable, chunks generated while transmission is stopped are not transmitted in real-time. On the other hand, if the QoS of the data stream is reliable, transmission limiting means 208 transmits, upon restart of the transmission of the data stream, this data stream from the chunk at the point in time when the transmission was stopped. For a data stream whose QoS is reliable, chunks generated while transmission was stopped are also transmitted.

Server device 30 functions as alias means 301, start response means 302, receiving means 303, conversion means 304, adding means 305, transmission means 306, and acknowledgment means 307.

Alias means 301 creates an alias for a data ID in response to an alias request from client device 20A. Specifically, alias means 301 assigns an alias value to a data ID for which an alias request has been received from client device 20A, and adds the alias value in association with the data name and data type constituting the data ID, to upstream dictionary 322. Upstream dictionary 322 is used for conversion between data IDs and alias values in communications between client device 20A and server device 30. Alias means 301 also stores downstream dictionary 222 transmitted from client device 20B in memory 32, as will be described later. Downstream dictionary 222 is used for conversion between data IDs and alias values in communications between server device 30 and client device 20B.

Start response means 302 transmits, to client device 20A, a response to the upstream start request transmitted from client device 20A at the start of the upstream transmission. When an alias is created for a data ID by alias means 301, the response includes upstream dictionary 322 that contains the alias value assigned to the data ID. If aliases are created for a plurality of data IDs, upstream dictionary 322 will contain a plurality of alias values. Also, when a downstream start request is transmitted from client device 20B as will be described later, start response means 302 receives the downstream start request and transmits a response to the downstream start request to client device 20B. If an alias for a data ID is created by client device 20B prior to the start of downstream transmission, this start request includes downstream dictionary 222 that contains an alias value assigned to the data ID. If aliases are created for a plurality of data IDs, downstream dictionary 222 will contain a plurality of alias values.

Receiving means 303 receives a data stream transmitted from client device 20A using chunks, through communication in a streaming format. Receiving means 303 may receive a plurality of data streams transmitted from client device 20A.

Conversion means 304 converts an alias value contained in a chunk of a data stream received by receiving means 303 into a data ID, based on upstream dictionary 322. Conversion means 304 also converts a data ID contained in a chunk of a data stream to be transferred to client device 20B into an alias value, based on downstream dictionary 222.

Adding means 305 adds upstream information to each chunk of the data stream to be transferred to client device 20B, among the plurality of data streams received by receiving means 303. The upstream information is information regarding upstream communication between client device 20A and server device 30. The upstream information is used to determine from which data stream a chunk that is transferred to client device 20B in the downstream transmission was transmitted in the upstream transmission. The upstream information contains a session ID, a stream ID, and a source client device ID. The session ID is an identifier that uniquely identifies the session to which the data stream belongs. In this context, "session" refers to a collection of data points that are unified according to a predetermined rule. As an example of a predetermined rule, a collection of data points that were acquired by one client device 20 and have a common date and time as a basis of time information can be regarded as a session, for example. The stream ID is an identifier that uniquely identifies a data stream in the upstream transmission. The source client device ID is an identifier that uniquely identifies client device 20 that transmitted a data stream.

Transmission means 306 transmits a data stream to client device 20B using chunks, through communication in a streaming format. Transmission means 306 can use protocols such as UDP, which does not guarantee data arrival but is suitable for real-time transmission, TCP (Transmission Control Protocol), which guarantees data arrival, WebSocket, and QUIC, which can switch between guaranteed arrival and unguaranteed arrival, as lower-level communication protocols.

Acknowledgment means 307 returns a chunk acknowledgment to client device 20 in response to the reception of a chunk. The acknowledgment is information indicating that the chunk was successfully received. For example, ACK (Acknowledgment) is used for this acknowledgment. Acknowledgment means 307 may return an acknowledgment of the reception of multiple chunks together. For example, acknowledgment means 307 may return an acknowledgment of the reception of a predetermined number of chunks together, or may return an acknowledgment of the reception of at least one chunk together every predetermined time.

Client device 20B functions as alias means 211, start request means 212, receiving means 213, conversion means 214, output control means 215, and loss determination means 216. Client device 20B is an example of a second client device according to the present disclosure.

Alias means 211 creates an alias for the data ID of data to be transmitted in downstream transmission. Specifically, alias means 211 assigns an alias value to a data ID for which an alias is to be created, and adds the alias value in association with the data name and data type constituting the data ID, to downstream dictionary 222. As described above, downstream dictionary 222 is used for conversion between data IDs and alias values in communications between server device 30 and client device 20B.

Start request means 212 transmits a downstream start request to server device 30 at the start of downstream transmission. When an alias is created for a data ID by alias means 211, the downstream start request includes downstream dictionary 322 that contains the alias value assigned to the data ID. If aliases are created for a plurality of data IDs, downstream dictionary 322 will contain a plurality of alias values. Also, in the downstream start request, the type of data that client device 20B wishes to acquire is requested to server device 30. Not all data streams received from client device 20A are transferred from server device 30, but data streams other than those requested to be acquired in the downstream start request from client device 20B are filtered out by server device 30, and the data streams requested to be acquired by client device 20B are transferred to client device 20B. A filter request used for this filtering includes a plurality of filter definitions. The filter definitions include a client device ID of client device 20, which is the source of data to be acquired, and the data ID of the data to be acquired. For the data ID used in the filter request, a wildcard that matches multiple data names and data types may be used as a method for specifying data names and data types.

Receiving means 213 receives a data stream transmitted from server device 30 using chunks, through communication in a streaming format. Note that, for a chunk that includes only data not requested by client device 20B as a result of filtering performed in server device 30 in response to a downstream start request as described above, all data point groups and data points contained in this chunk are filtered out and emptied. Also in such a case, server device 30 transmits the empty chunk to client device 20B. Thus, there may be an empty chunk received by receiving means 213 in downstream transmission. The reason such an empty chunk is transmitted in this manner is that if an empty chunk is not transmitted, it will be indistinguishable from data loss on the communication path.

Conversion means 214 converts an alias value contained in a chunk of the data stream received by receiving means 213 into a data ID based on downstream dictionary 222.

Output control means 215 causes output device 25 to output the data stream received by receiving means 213 in real time.

Loss determination means 216 determines whether or not there is data loss on an end-to-end two-way communication path composed of an upstream part and a downstream part, based on the sequence numbers contained in the chunks. The two-way communication path is a communication path from client device 20A to client device 20B via server device 30, and is an example of a second communication path according to the present disclosure. As described above, to a plurality of chunks contained in the same data stream when transmitted from client device 20A, consecutive sequence numbers are given in the order of their transmission. If there is a missing sequence number in the sequence numbers of chunks included in the same data stream when received by client device 20B, it indicates that the corresponding chunk of the data stream is lost on any part of the two-way communication path. Therefore, if there is a missing sequence number in the sequence numbers of chunks included in the same data stream, loss determination means 216 determines that the corresponding chunk included in the data stream is lost on the two-way communication path.

Note that, although FIG. 2 shows an example where client device 20A has the upstream transmitting function and client device 20B has the downstream receiving function, one client device 20 may have both the upstream transmitting function and the downstream receiving function.

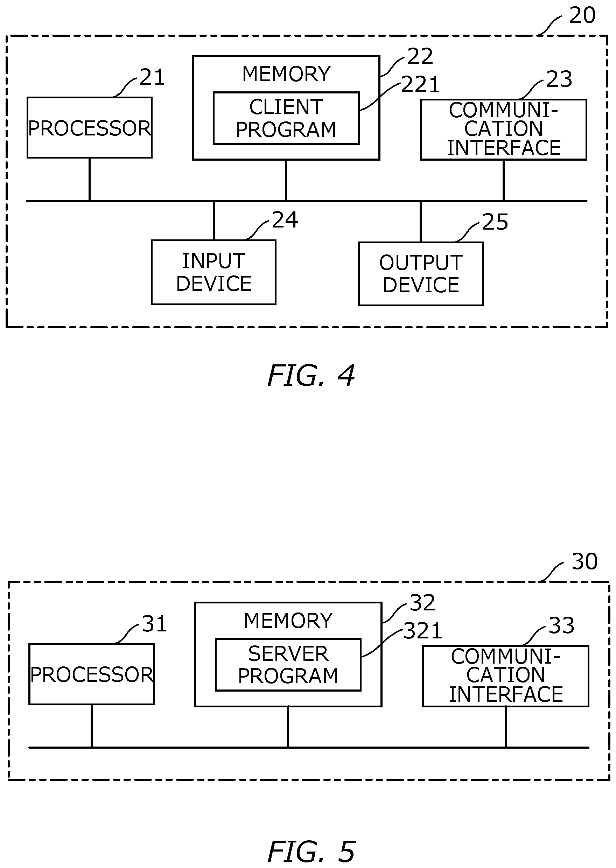

FIG. 4 is a diagram showing an example of a hardware configuration of client device 20. Client device 20 includes processor 21, memory 22, communication interface 23, input device 24, and output device 25. The components of client device 20 are connected to each other via a bus. Processor 21 performs various types of calculations by executing programs and controls the components of client device 20. Processor 21 includes, for example, one or more CPUs (Central Processing Units). Memory 22 stores various types of programs including client program 221, and various types of data. Client program 221 is a program for causing client device 20 to perform the above-described functions. Memory 22 includes at least one of a ROM (Read Only Memory), a RAM (Random Access Memory), an HDD (Hard Disk Drive), and an SSD (Solid State Drive), for example. Communication interface 23 performs data communication with server device 30 via network 40. Communication interface 23 also performs data communication with sensors 10. Input device 24 accepts inputs from a user and an external system. Input device 24 includes at least one of a mouse, a keyboard, and operation buttons, for example. Output device 25 outputs various types of information to the user or external system. The output includes presentation to the user, output to the external system for use in control, and conversion processing for linking to other programs. Output device 25 includes at least one of a liquid crystal display and an organic EL (Electro Luminescence) display, for example.

Sorting means 203, conversion means 204, generation means 205, and transmission limiting means 208 shown in FIG. 2 are realized by processor 21 of client device 20A executing client program 221 stored in memory 22. Start request means 201, acquisition means 202, transmission means 206, and re-transmission means 207 shown in FIG. 2 are realized by communication interface 23 of client device 20A under the control of processor 21 executing client program 221 stored in memory 22 of client device 20A. Alias means 211, conversion means 214, output control means 215, and loss determination means 216 shown in FIG. 2 are realized by processor 21 of client device 20B executing client program 221 stored in memory 22. Start request means 212 and receiving means 213 shown in FIG. 2 are realized by communication interface 23 of client device 20B under the control of processor 21 executing client program 221 stored in memory 22 of client device 20B.

FIG. 5 is a diagram showing an example of a hardware configuration of server device 30. Server device 30 includes processor 31, memory 32, and communication interface 33. The components of server device 30 are connected to each other via a bus. Server device 30 is an example of a computer according to the present disclosure. Processor 31 performs various types of calculations by executing programs and controls the components of server device 30. Processor 31 includes, for example, one or more CPUs. Memory 32 stores various types of programs including server program 321, and various types of data. Server program 321 is a program for causing server device 30 to perform the above-described functions. Memory 32 includes at least one of ROM, RAM, HDD, and SSD, for example. Communication interface 33 performs data communication with client device 20 via network 40. Communication interface 33 is an example of a communication means according to the present disclosure.

Alias means 301, conversion means 304, and adding means 305 shown in FIG. 2 are realized by processor 31 executing server program 321 stored in memory 32. Start request means 302, receiving means 303, transmission means 306, and acknowledgment means 307 shown in FIG. 2 are realized by communication interface 33 under the control of processor 31 executing server program 321 stored in memory 32 of server device 30.

### 2. Operation

### 2.1 Stream Starting Processing

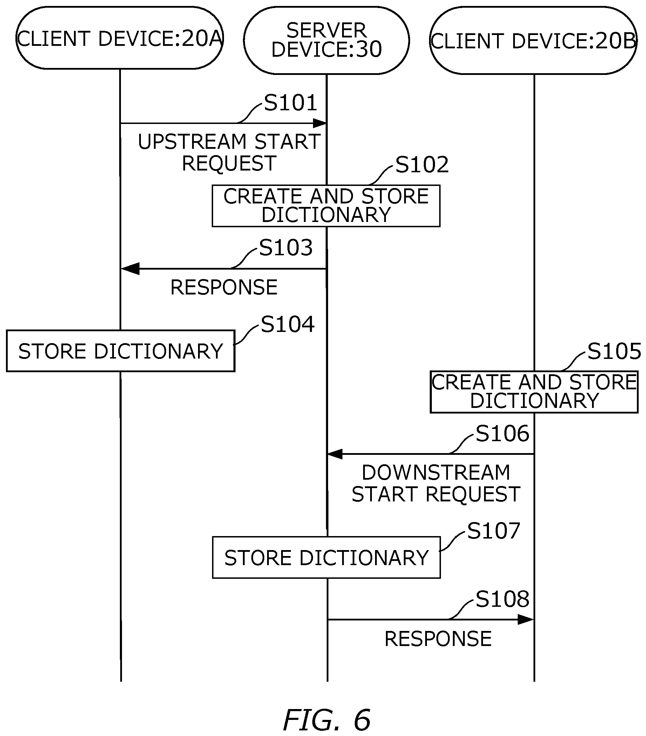

FIG. 6 is a sequence chart showing an example of stream starting processing. This processing is performed when starting upstream or downstream transmission. Here, it is assumed that a data stream transmitted from client device 20A to server device 30 is transferred from server device 30 to client device 20B. First, processing for starting upstream transmission will be described.

In step S101, start request means 201 of client device 20A transmits an upstream start request to server device 30. When requesting the creation of an alias for the data ID of data to be transmitted in upstream transmission, the upstream start request includes a data ID list. For example, the data ID list includes a data ID composed of a data name "Data001" and a data type "Type001".

In step S102, when an upstream start request also serves as an alias request, alias means 301 of server device 30 creates upstream dictionary 322 in response to this alias request and stores it in memory 32. Thus, in the upstream transmission, the creation of upstream dictionary 322 is performed in server device 30, which is on the receiving side.

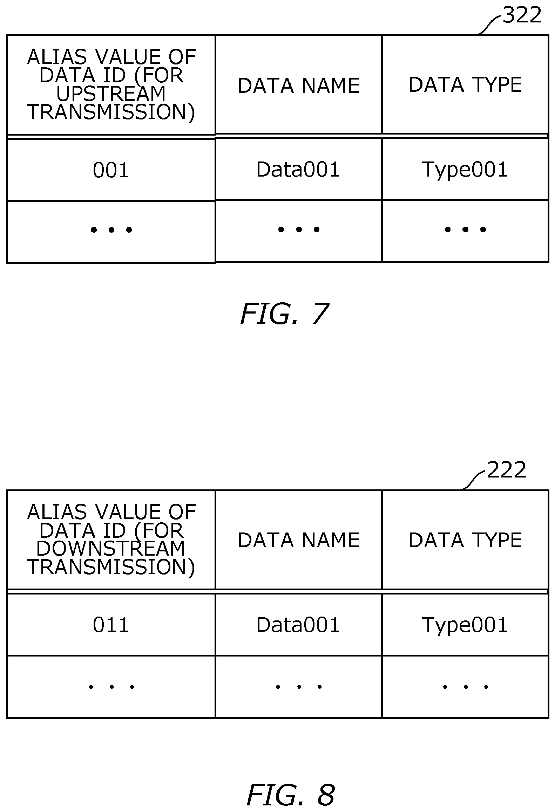

FIG. 7 is a diagram showing an example of upstream dictionary 322. Dictionary 322 stores the alias value of a data ID in association with the data name and data type constituting this data ID. Here, a case is assumed where the data ID list includes a data ID composed of the data name "Data001" and the data type "Type001." First, alias means 301 assigns the alias value "001" to this data ID. Then, alias means 301 adds this alias value "001" in association with the data name "Data001" and the data type "Type001" to dictionary 322.

Returning to FIG. 6, in step S103, start response means 302 of server device 30 transmits a response to the upstream start request to client device 20A. When upstream dictionary 322 has been created in response to the alias request, this response contains upstream dictionary 322.

In step S104, start request means 201 of client device 20A receives the response from server device 30. With this, upstream transmission is started between client device 20A and server device 30. Also, when the response contains upstream dictionary 322, this upstream dictionary 322 is stored in memory 22 of client device 20A. With this, the same upstream dictionary 322 is stored in both server device 30 and client device 20A.

The following will describe processing for starting downstream transmission. Note that in the example shown in FIG. 6, the upstream start processing is followed by the downstream start processing, but either of these types of processing may be performed first or these types of processing may be performed in parallel.

In step S105, when creating an alias for the data ID of data to be transmitted in downstream transmission, alias means 211 of client device 20B creates downstream dictionary 222 and stores it in memory 22. Thus, in the downstream transmission, the creation of downstream dictionary 222 is performed in client device 20B, which is on the receiving side.

FIG. 8 is a diagram showing an example of downstream dictionary 222. Dictionary 222 stores the alias value of a data ID in association with the data name and data type constituting this data ID. Here, a case is assumed where the data ID composed of the data name "Data001" and the data type "Type001" is a target for alias. First, alias means 211 assigns the alias value "011" to this data ID. Then, alias means 211 adds this alias value "011" in association with the data name "Data001" and the data type "Type001" to dictionary 222.

Returning to FIG. 6, in step S106, start request means 212 of client device 20B transmits a downstream start request to server device 30. When downstream dictionary 222 has been created by client device 20B before the start of the downstream transmission, the downstream start request includes created downstream dictionary 222.

In step S107, start response means 302 of server device 30 receives the downstream start request from client device 20B. Also, when the downstream start request includes downstream dictionary 222, this downstream dictionary 222 is stored in memory 32. With this, the same downstream dictionary 222 is stored in both server device 30 and client device 20B.

In step S108, start response means 302 of server device 30 transmits a response to the downstream start request to client device 20B. The response transmitted from server device 30 is received by start request means 212 of client device 20B. With this, downstream transmission is started between server device 30 and client device 20B.

### 2.2 Transmission of Data Stream

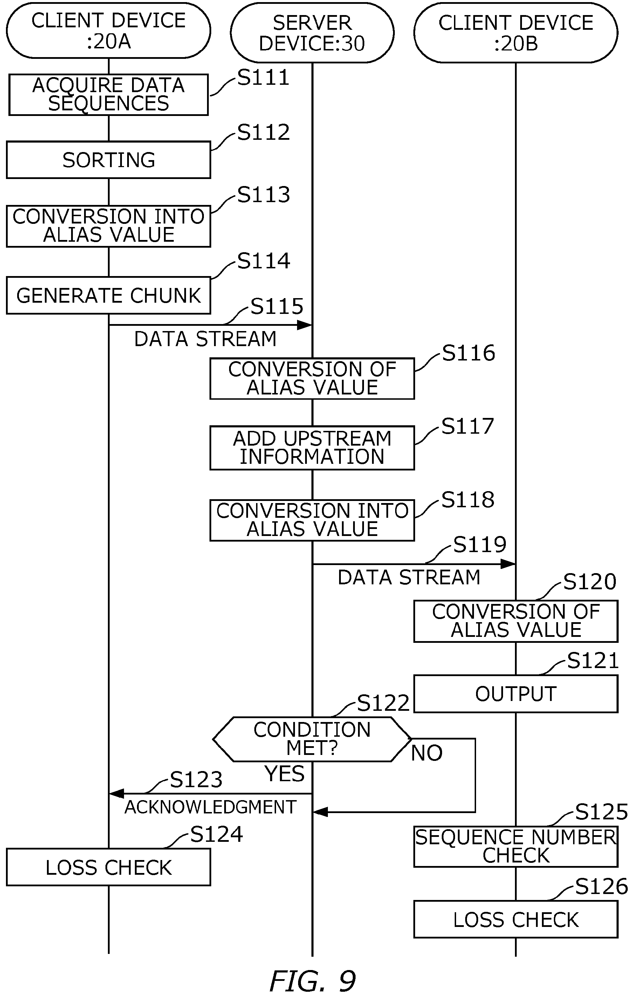

FIG. 9 is a sequence chart showing an example of processing for transmitting a data stream. The processing shown in FIG. 9 is executed after the above-described stream starting processing is completed.

In step S111, acquisition means 202 of client device 20A acquires multiple data sequences output from multiple sensors 10. If the data sequences do not contain time information, acquisition means 202 adds time information to each data body contained in the data sequences. As a result of this processing, a plurality of data points each composed of a set of data body and time information are included in the data sequences. Also, acquisition means 202 adds a data ID to each data point.

In step S112, sorting means 203 of client device 20A sorts a plurality of data points into a plurality of data streams based on the configuration information stored in memory 22.

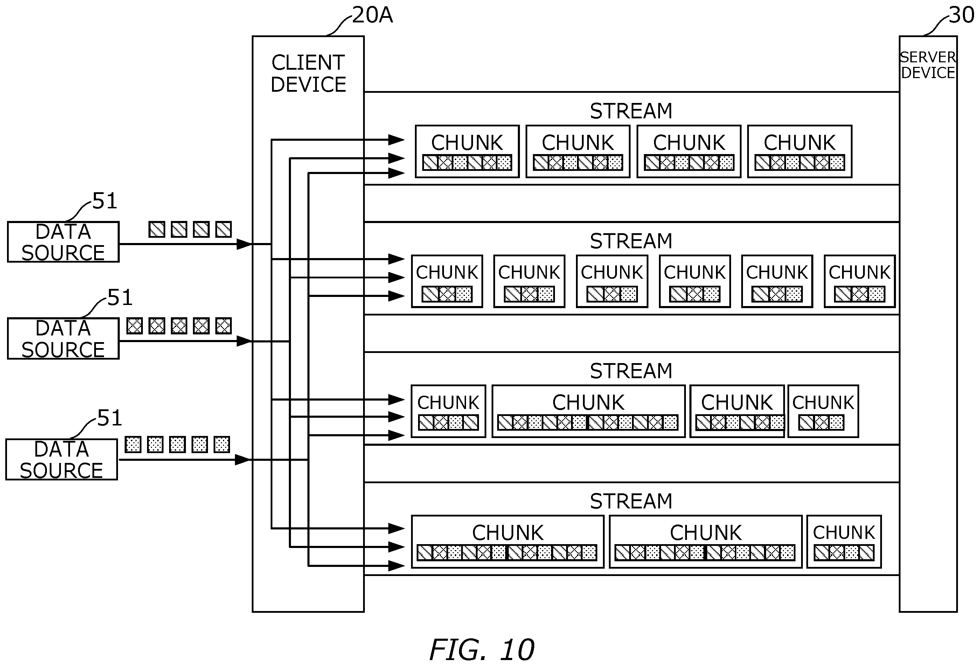

FIG. 10 is a diagram illustrating an example of sorting of data points. In this example, three data sources 51 output three data sequences to client device 20A. These data sources 51 are, for example, sensors 10 different from each other. Alternatively, data source 51 may be a bus to which multiple sensors 10 are connected. Data points contained in the three data sequences output from three data sources 51 are then sorted into four data streams based on the configuration information. For each data stream, transmission conditions including one type of the QoS, including reliable and unreliable, are defined in advance. In the configuration information, sorting destinations of the data points are set based on the transmission conditions of the data streams.

As an example, a case is assumed where a user wants to check data output from the accelerator sensor and data output from the brake sensor in real time with as low delay as possible, but the user need only store data output from a speedometer in server device 30 and wants to acquire data output from the GPS without loss to perform some sequential processing on the data. In this case, in the configuration information, the sorting destinations of data points of a data sequence output from the accelerator sensor and data points of a data sequence output from the brake sensor are set to data streams whose QoS is unreliable. On the other hand, in the configuration information, the sorting destinations of data points of a data sequence output from the GPS are set to data streams whose QoS is reliable. In addition, any QoS may be set for data streams that serve as the sorting destinations of data points of a data sequence output from the speedometer. Note here that, for ease of description, data sorting is set only based on QoS, but in reality, besides QoS, there are several other transmission conditions, such as whether or not the data is stored in server device 30, so the sorting destinations of data points are set taking into account not only QoS but also other conditions.

In another example, a case is assumed where video data is output from a camera. Video data in compressed codec formats such as H.264 contains meta information, key frames, and subframes. Among them, meta information and key frames, if lost, can have a significant impact on image quality or, in the worst case, make video decoding impossible, but such data occurs infrequently. Therefore, such data is suitable for reliable transmission, which prioritizes transmission without loss. On the other hand, subframes, if lost, can have a small impact on image quality, but such data occurs frequently and tends to squeeze bandwidth. Therefore, such data is suitable for unreliable transmission, which prioritizes real-time performance while tolerating loss. In this case, in the configuration information, the sorting destinations of meta information and keyframes of the video data output from the camera are set to the data streams whose QoS is reliable. On the other hand, in the configuration information, the sorting destinations of subframes of the video data output from the camera are set to the data streams whose QoS is unreliable.

More specifically, when a data stream is obtained from data source 51, sorting means 203 of client device 20A obtains a data point from this data stream. Then, sorting means 203 selects the data stream that has been set as the destination for the data ID of this data point in the configuration information. Sorting means 203 then determines whether or not the buffers of the selected data stream include a buffer of the data point group to which this data point belongs. If there is such a buffer of the data point group to which this data point belongs, sorting means 203 stores the data point in the buffer. On the other hand, if there is no buffer of the data point group to which this data point belongs, sorting means 203 creates a new buffer of the data point group for the selected data stream and stores the data point in this buffer. When data points are unified into a data point group, the data IDs of individual data points are collected into data IDs of the data point group for efficiency. In other words, the data IDs are deleted from the individual data points and are given together to the data point group.

Returning to FIG. 9, in step S113, conversion means 204 of client device 20A converts the data IDs of the data point groups into alias values based on upstream dictionary 322 stored in memory 22. For example, if upstream dictionary 322 includes the alias value and data ID of dictionary 322 shown in FIG. 7, conversion means 204 converts the data ID composed of the data name "Data001" and data type "Type001" into the alias value "001."

In step S114, generation means 205 of client device 20A generates chunks of the data stream. As shown in FIG. 3, each chunk contains a sequence number and a plurality of data point groups. To a plurality of chunks contained in the same data stream, consecutive sequence numbers are assigned in the order of their transmission. For example, the sequence number "1" is assigned to a chunk generated first in a certain data stream. Then, each time a new chunk is generated in the same data stream, the sequence number included in the chunk is incremented by 1. Note that the sequence number need only be a sequential number that is incremented by a predetermined rule, and the increment range does not necessarily have to be 1. Each data point group includes a data ID and at least one data point. When the capacity of the buffer of each data stream exceeds a predetermined amount, or when a predetermined amount of time has elapsed since the last chunk transmission, generation means 205 stores, in the chunk, the data point group stored in the buffer. Note that the timing for storing data points in a chunk is not limited to the above-described timing, but the storing may be performed, for example, at desired intervals with non-uniform time elapsed since the last chunk transmission, or the timing may be determined in a desired manner by a user instruction.

Different chunk generation conditions are defined for a plurality of data streams, depending on the transmission conditions. Examples of the chunk generation conditions include a condition that the chunk size reached a predetermined amount or a predetermined amount of time elapsed since the last chunk generation. Since the chunk generation conditions differ between data streams, as shown in FIG. 10, the number of data points, i.e., the amount of data contained in a chunk, varies depending on the data stream. For example, the predetermined amount and predetermined time of a data stream whose QoS is reliable are greater than the predetermined amount and predetermined time of a data stream whose QoS is unreliable. As a result, in a data stream whose QoS is reliable, chunks with a larger number of data points are transmitted at relatively long time intervals. In other words, chunks of a data stream whose QoS is reliable have a larger amount of data and longer transmission intervals than chunks of a data stream whose QoS is unreliable. On the other hand, in a data stream whose QoS is unreliable, chunks with a smaller number of data points are transmitted at relatively short time intervals. In other words, chunks of a data stream whose QoS is unreliable have a smaller amount of data and shorter transmission intervals than chunks of a data stream whose QoS is reliable.

Note that the fact that the size of chunks varies according to QoS is an overall trend but does not necessarily have to follow that trend. For example, a data stream whose QoS is reliable is suitable for transmitting data with a requirement that prioritizes integrity over real-time performance, and for transmitting data with this requirement, it is preferable to set chunks with a larger amount of data and longer transmission intervals. Accordingly, there is only tendency of chunks with a larger amount of data and longer transmission intervals being set for the data stream whose QoS is reliable, and for a data stream whose QoS is reliable, transmission conditions with a smaller amount of data and shorter transmission intervals may be set. In addition, as shown in FIG. 10, the chunk size may differ within the same stream.

Returning to FIG. 9, in step S115, transmission means 206 of client device 20A transmits the plurality of data streams to server device 30 in units of chunks. Transmission means 206 starts transmitting the data streams before the entire data sequences are completely acquired. The plurality of data streams transmitted from the client device 20A are received by receiving means 303 of server device 30.

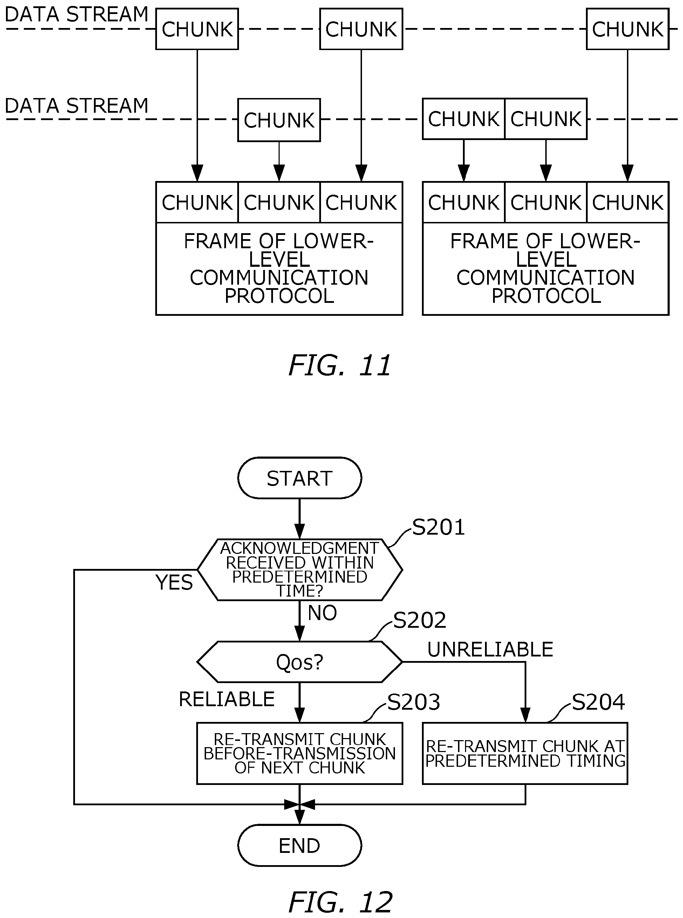

FIG. 11 is a diagram showing an example of transmission of data streams. Note that FIG. 11 shows only two data streams but the number of data streams may be three or more. Transmission means 206 can use protocols such as, for example, UDP, which does not guarantee data arrival but is suitable for real-time transmission, TCP (Transmission Control Protocol), which guarantees data arrival, WebSocket, and QUIC, which can switch between guaranteed arrival and unguaranteed arrival, as lower-level communication protocols. Transmission means 206 transmits the plurality of chunks generated in the plurality of data streams in order according to the lower-level communication protocol. Here, the constituent elements of the data contained in each chunk are transmitted together in the same data stream. As shown in FIG. 3, a chunk does not contain markers that indicate the separation from other chunks. Therefore, even if the order of the data is changed or some of the data is lost, the structure of the chunk is maintained.

Returning to FIG. 9, in step S116, conversion means 304 of server device 30 converts the alias value contained in the chunk of the received data stream into a data ID based on upstream dictionary 322 stored in memory 32. For example, conversion means 304 converts the alias value "001" included in the chunk into the data ID composed of the data name "Data001" and the data type "Type001," based on upstream dictionary 322 shown in FIG. 7.

Here, for each data point group, processing to be performed by server device 30 is defined in advance according to the transmission conditions of the data stream. A data stream for which processing of storing the data stream in server device 30 is defined in advance is stored in memory 32. On the other hand, a data stream that is requested to be acquired in a downstream start request from client device 20B is subjected to steps S117 onward so that it is transferred to client device 20B. Note that the content of processing that is performed by server device 30 is not limited only to storage and transfer in the downstream transmission.

In step S117, adding means 305 of server device 30 acquires chunks of the data stream to be transferred to client device 20B, and adds upstream information to each acquired chunk. The upstream information contains a session ID, a stream ID, and a source client device ID.

In step S118, conversion means 304 of server device 30 converts the data IDs contained in the chunks into alias values based on downstream dictionary 222 stored in memory 32. For example, if downstream dictionary 222 includes the alias value and data ID shown in FIG. 8, conversion means 304 converts the data ID composed of the data name "Data001" and data type "Type001" into the alias value "011."

Returning to FIG. 9, in step S119, transmission means 306 of server device 30 transmits the data streams to client device 20B in units of chunks. Transmission means 306 starts transmitting the data streams before the entire data streams are completely received. The data streams transmitted from server device 30 are received by receiving means 213 of client device 20B.

In step S120, conversion means 214 of client device 20B converts the alias values contained in the chunks of the received data streams into data IDs based on downstream dictionary 222 stored in memory 22. For example, conversion means 214 converts the alias value "011" included in the chunk into a data ID composed of the data name "Data001" and the data type "Type001," based on downstream dictionary 222 shown in FIG. 8.

In step S121, output control means 215 of client device 20B causes output device 25 to output the data streams in real time. Output control means 215 causes output device 25 to output the data streams before the entire data streams are completely received, and upon receiving a new chunk, output control means 215 causes output device 25 to update the output content according to the chunk. For example, if a display is used as output device 25, a visualized image or graph of the information observed by each of sensors 10, such as the amount of accelerator operation measured by the accelerator sensor, the amount of brake operation measured by the brake sensor, and position information measured by the GPS, is displayed.

In step S122, acknowledgment means 307 of server device 30 determines whether or not the condition for transmitting an acknowledgment is met. An example of the condition for transmitting an acknowledgment is a condition that the capacity of the buffer in which the chunk processing results are stored exceeds a predetermined amount, or a condition that a predetermined amount of time has elapsed since the previous chunk was transmitted. Acknowledgment means 307 stores the chunk processing results in the buffer, and when the capacity of the buffer exceeds the predetermined amount, or when a predetermined amount of time has elapsed since the transmission of the previous chunk, acknowledgment means 307 determines that the condition for transmitting an acknowledgment is met (determination of step S122 is YES). In this case, in step S123, acknowledgment means 307 transmits an acknowledgment including the processing results stored in the buffer to client device 20A. With this, acknowledgment indicating the reception of a plurality of chunks is made collectively. On the other hand, if the condition for transmitting an acknowledgment is not met (determination of step S122 is NO), the processing in step S123 is skipped. Note that an acknowledgment may be transmitted each time a chunk is received. As with server device 30, client device 20B may also transmit an acknowledgment to server device 30 in response to the reception of the chunks. In step S124, re-transmission means 207 of client device 20A checks whether or not there is data loss on the upstream communication path based on the presence or absence of an acknowledgment from server device 30 (details thereof will be described later).

In step S125, loss determination means 216 of client device 20B checks the sequence numbers and upstream information included in the chunks of the data streams received from server device 30. In step S126, loss determination means 216 of client device 20B checks whether or not there is data loss on the two-way communication path based on the sequence numbers and the upstream information.

The processes from steps S111 to S126 are repeated while the object is being observed by sensors 10.

### 2.3 Re-transmission

FIG. 12 is a flow chart showing an example of processing of client device 20A re-transmitting a chunk. This processing is started each time a chunk is transmitted from client device 20A to server device 30.

In step S201, re-transmission means 207 of client device 20A determines whether or not an acknowledgment indicating the reception of a chunk is received from server device 30 within a predetermined time after the chunk has been transmitted. If an acknowledgment indicating the reception of the chunk is received within the predetermined time (determination of step S201 is YES), this processing ends. On the other hand, if no acknowledgment indicating the reception of the chunk is received within the predetermined time (determination of step S201 is NO), re-transmission means 207 determines the QoS of the data stream to which the chunk belongs (step S202).

If the QoS of this data stream is reliable (determination of step S202 is "Reliable"), in step S203, re-transmission means 207 re-transmits the chunk for which no acknowledgment was received, before the next chunk is transmitted. On the other hand, if the QoS of the data stream is unreliable (determination of step S202 is "Unreliable"), in step S204, re-transmission means 207 re-transmits the chunk for which no acknowledgment was received, at a predetermined timing. The predetermined timing is a timing later than the timing at which the chunk is re-transmitted in step S203, such as, for example, when a spare communication bandwidth is available or an instruction is given by the user. When the QoS of a data stream is unreliable, the purpose of re-transmitting the chunk of that data stream is to store data in server device 30, instead of transferring data. Therefore, the re-transmission of a chunk of a data stream whose QoS is unreliable does not necessarily have to use the communication protocol used for communication in a streaming format, but may use a different communication protocol.

### 2.4 Data loss Determination

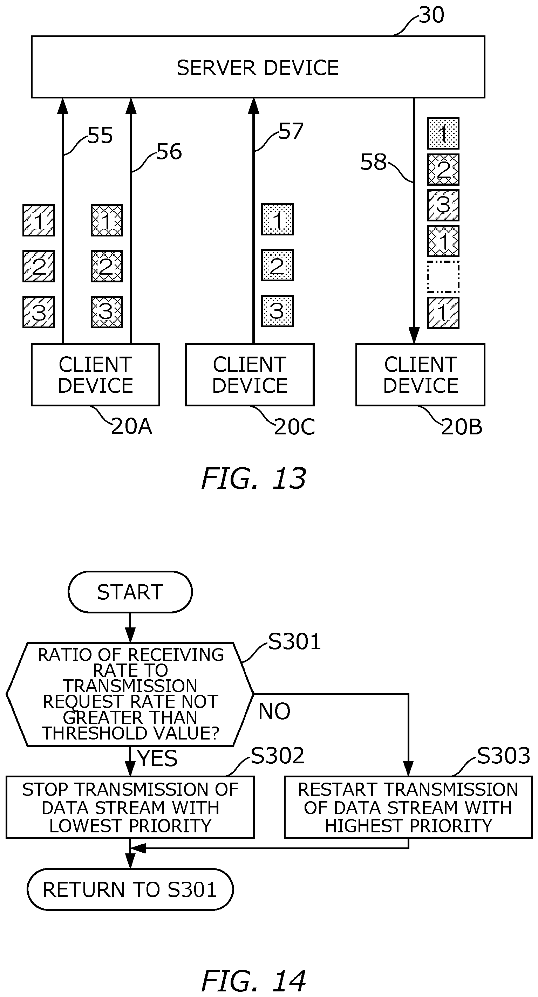

FIG. 13 is a diagram illustrating an example of processing for determining whether or not there is data loss on the two-way communication path. In this example, it is assumed that a plurality of chunks contained in data streams 55 and 56 transmitted from client device 20A and in data stream 57 transmitted from client device 20C are transferred from server device 30 to client device 20B as data stream 58, and are received by client device 20B.

As described above, each chunk of data stream 58 transmitted from server device 30 to client device 20B contains upstream information. In this example, the upstream information for each chunk included in data stream 55 in the downstream transmission includes the client device ID of client device 20A and the stream ID of data stream 55. The upstream information for each chunk included in data stream 56 in the upstream transmission includes the client device ID of client device 20A and the stream ID of data stream 56. The upstream information for each chunk included in data stream 57 in the upstream transmission includes the client device ID of client device 20C and the stream ID of data stream 57.

Also, as shown in FIG. 13, each chunk contains a sequence number. In this example, a plurality of chunks contained in data stream 55 include consecutive sequence numbers "1," "2," "3." Similarly, a plurality of chunks contained in data stream 56 include consecutive sequence numbers "1," "2," "3." A plurality of chunks contained in data stream 57 include consecutive sequence numbers "1," "2," "3."

Loss determination means 216 of client device 20B determines whether or not there is data loss on the two-way communication path, based on the sequence numbers and upstream information contained in the chunks of data stream 58 received from server device 30. In the example shown in FIG. 13, after the chunk including the stream ID of data stream 55 and the sequence number "1" is received, the chunk including the stream ID of data stream 55 and the sequence number "2" is not received, but the chunk including the stream ID of data stream 55 and the sequence number "3" is received. Accordingly, when "2" in the sequence numbers of chunks included in data stream 55 is missing, this means that the chunk that includes the sequence number "2" and is included in data stream 55 is lost on the two-way communication path. In this case, loss determination means 216 determines that the chunk that includes the sequence number "2" and is included in data stream 55 transmitted from client device 20A is lost on the two-way communication path. Note that the loss determination method is not limited to the above-described method that determines there is data loss if a certain sequence number is not received and a larger sequence number is received, and there is a missing number. For example, a method may also be used in which the reception of sequence numbers is awaited for a predetermined time and if a certain sequence number is not received within the predetermined time, this sequence number is determined to be lost.

When a chunk is determined to be lost, client device 20B may consider the communication quality to be degraded and may shift to fail-safe operation, for example. Alternatively, client device 20B may also notify server device 30 of the determination result, present the determination result to the user via output device 25, or complement the lost value from the previous and subsequent chunks.

As described above, since server device 30 transmits an acknowledgment, client device 20A can determine whether or not there is data loss on the upstream communication path, based on the presence or absence of an acknowledgment returned from server device 30. For example, if server device 30 does not reply with an acknowledgment for a certain chunk, client device 20A determines that this chunk is lost on the upstream communication path. Also, server device 30 can determine, as with client device 20A, whether or not there is data loss on the downstream communication path based on the presence or absence of an acknowledgment returned from client device 20B. Both the upstream communication path and the downstream communication path are communication paths between the server device 30 and the client device 20A or 20B, and are examples of a first communication path according to the present disclosure.

However, if, for example, there is data loss on the upstream communication path but there is no data loss on the downstream communication path, the data loss cannot be determined by the above-described method for determining data loss on the downstream communication path. Therefore, client device 20B cannot recognize that there is data loss on the upstream communication path. Accordingly, client device 20B determines that there is data loss on the two-way communication path by a method different from the method for determining data loss on the upstream or downstream communication path as described above, i.e., a method using sequence numbers. With this, even when there is data loss on the upstream communication path, client device 20B can recognize the data loss. The two-way communication path is an example of a second communication path according to the present disclosure.

As a method of determining data loss on the two-way communication path using sequence numbers, a method may be used in which, if an acknowledgment indicating the reception of a certain chunk is not received from server device 30 within a predetermined time, client device 20A notifies server device 30 of the loss of this chunk, and server device 30 notifies client device 20B of the loss of this chunk. More specifically, server device 30 notifies client device 20B of the stream ID of the stream to which the lost chunk belongs and the sequence number, in response to the notification from client device 20A. Upon receiving this notification, loss determination means 216 of client device 20B determines that the chunk that is included in the data stream indicated by the stream ID and corresponds to the sequence number is lost. Even using such a method, data loss on the two-way communication path can be determined using sequence numbers.

### 2.5 Update of Dictionary During Stream

Upstream dictionary 322 or downstream dictionary 222 may be updated during upstream communication or downstream communication, respectively. The following will first describe the method of updating upstream dictionary 322 during upstream communication. When performing this update, a chunk transmitted from client device 20A also serves as an alias request. When a chunk also serves as an alias request, a data ID list is added to the chunk. The data ID list contains data IDs for which aliases are to be created. When a chunk also serves as an alias request, alias means 301 of server device 30 assigns an alias value to a data ID in the data ID list in response to this alias request, and adds the alias value in association with the data name and data type constituting this data ID to dictionary 322. An acknowledgment to be transmitted from server device 30 to client device 20A newly contains updated upstream dictionary 322. If the acknowledgment contains upstream dictionary 322, this upstream dictionary 322 will be stored in memory 22 of client device 20A. With this, upstream dictionary 322 can be updated during upstream communication. Note that, instead of the entire upstream dictionary 322, only the updated portion of the dictionary may be transmitted from server device 30 to client device 20A with an acknowledgment.

Next, the method of updating downstream dictionary 222 during downstream communication will be described. When performing this update, alias means 211 of client device 20B assigns an alias value to a new data ID that is to be newly subjected to alias creation during downstream communication, and adds the alias value in association with the data name and data type constituting this data ID to downstream dictionary 222. Also, an acknowledgment to be transmitted from client device 20B to server device 30 newly contains updated downstream dictionary 222. If the acknowledgment contains downstream dictionary 222, this downstream dictionary 222 will be stored in memory 32. With this, downstream dictionary 222 can be updated during downstream communication. Note that, similar to upstream communication, instead of the entire downstream dictionary 222, only the updated portion of the dictionary may be transmitted from client device 20B to server device 30 with an acknowledgment.

### 2.6 Limitation of Amount of Data Transmission Based on Bandwidth

FIG. 14 is a flow chart showing an example of processing for limiting the amount of data transmission based on bandwidth. This processing is started at predetermined time intervals during the transmission of data streams. Also, a priority is given in advance to each data stream. This priority is described, for example, in a configuration file of client device 20A.

In step S301, transmission limiting means 208 of client device 20A determines whether or not the ratio of the receiving rate of server device 30 to the transmission request rate of client device 20A (receiving rate/transmission request rate) is not greater than a threshold value. The transmission request rate is the rate of transmission requested by client device 20A. The receiving rate is the actual rate of reception by server device 30. The receiving rate is measured by server device 30 at predetermined time intervals and is transmitted to client device 20A. If the ratio of the receiving rate to the transmission request rate is not greater than the threshold value, this means that the bandwidth of the communication path between client device 20A and server device 30 is insufficient. In addition to the ratio of the receiving rate to the transmission request rate, the difference (transmission request ratereceiving rate) may be used for determination regarding bandwidth shortage.

If the ratio of the receiving rate to the transmission request rate is not greater than the threshold value (the decision in step S301 is YES), in step S302, transmission limiting means 208 of client device 20A stops transmission of the data stream with the lowest priority among the data streams being transmitted. Here, if the QoS of a data stream is unreliable, chunks generated while the transmission of the data stream is stopped are discarded. On the other hand, if the QoS of a data stream is reliable, chunks generated while the transmission of the data stream is stopped are temporarily stored in memory 22 of client device 20A.

After the processing in step S302, the processing returns to step S301. Then, the processing in step S302 is repeated until the ratio of the receiving rate to the transmission request rate exceeds the threshold value. In this way, transmission is stopped in order from the data stream with the lowest priority.

On the other hand, when the bandwidth shortage is resolved, the above-described determination in step S301 results in NO. In this case, in step S303, transmission limiting means 208 of client device 20A restarts transmission of the data stream with the highest priority among the data streams whose transmission has been stopped. Here, when the QoS of the data stream is unreliable, and transmission of the data stream is restarted, the data stream is transmitted from the chunk generated after the transmission has been restarted. Chunks generated while transmission was stopped are not transmitted. On the other hand, when the QoS of the data stream is reliable, and transmission of the data stream is restarted, the data stream is transmitted first from the chunks generated while transmission is stopped and stored in memory 22 of client device 20A, followed by the chunks generated after the restart. Thus, transmission of data streams whose QoS is reliable may be delayed because chunks generated while transmission is stopped are also transmitted.

After the processing in step S303, the processing returns to step S301. Then, the processing in step S303 is repeated until the ratio of the receiving rate to the transmission request rate reaches the threshold value. In this way, transmission is restarted in order from the data stream with the highest priority.

On the other hand, with respect to a data stream whose QoS is unreliable, chunks generated while transmission is stopped may be temporarily stored in memory 22 of client device 20A, and may be transmitted at a predetermined timing later than the restart of transmission of the data stream, such as when a sufficient spare communication bandwidth is available or an instruction is given by the user.

Note that the processing of limiting the amount of data transmission based on bandwidth may be performed by not only client device 20A but also server device 30. In this case, server device 30, as with client device 20A, limits the amount of data transmission by stopping or restarting downstream data transmission based on downstream bandwidth.

According to the above-described embodiment, a chunk that is the unit for transmitting a data stream has a data structure that does not use markers that indicate the separation from other chunks, and thus the data structure can be maintained even if part of the chunk is lost or the order of data in the chunk is changed during data transmission. According to this data structure, it is no longer necessary to guarantee the data transmission order and the data arrival, and thus it is possible to adopt, for example, communication protocols suitable for real-time transmission but having no arrival guarantee or re-transmission control, as lower-level protocols. In addition, chunks have a data structure in which data points with the same data ID are unified into a single data point group and only one data ID is stored for the data point group, and thus it is possible to reduce the amount of data compared to a data structure in which each data point has a data ID.

Furthermore, the amount of data in chunks can be made different between data streams, and thus a variety of streams suitable for requirements can be prepared. For example, by shortening the predetermined time (hereinafter referred to as "buffer time") included in the chunk generation condition, a data stream with a small amount of data in chunks is realized. This data stream contributes to the real-time performance of data transmission because the delay is small due to the buffer time. Also, by extending the buffer time, a data stream with a large amount of data in chunks is realized. As the amount of data in chunks increases, the effects of the reduction of redundant data such as data IDs increases, so this data stream can increase the effectiveness of data reduction and the efficiency of data transmission.

Furthermore, data points can be sorted and transmitted to a plurality of data streams based on the transmission requirements of the data streams, and thus it is possible to transmit the data points with various requirements.

Furthermore, a chunk of a data stream whose QoS is reliable is re-transmitted immediately if the reception of the chunk is not confirmed, whereas a chunk of a data stream whose QoS is unreliable is re-transmitted, if the reception of the chunk is not confirmed, at a predetermined timing thereafter, so it is possible to re-transmit data at a timing suitable for the QoS of the data stream.

Furthermore, it is determined whether or not there is any loss in data stream on the upstream or downstream communication path, based on the presence or absence of a reply with an acknowledgment indicating the reception of a chunk, and thus a loss in data stream on the upstream or downstream communication path can be recognized. In addition, it is determined whether or not there is any loss in data stream on the two-way communication path, using sequence numbers included in chunks, and thus client device 20B can recognize a loss in data stream on the two-way communication path.

Furthermore, alias values with reduced amount of data are used instead of data IDs, each consisting of a data name and a data type for which desired character strings are used, and thus it is possible to reduce the amount of data in data streams and improve the transmission efficiency.

Furthermore, if the bandwidth of the communication path is insufficient, transmission is stopped in order from the data stream with the lowest priority, thus avoiding delay or loss of high priority data by suppressing transmission of low priority data according to the bandwidth of the communication path. Also, when the bandwidth shortage in the communication path is resolved, transmission is restarted in order from the data stream with the highest priority. At the restart of data stream transmission, with respect to a data stream whose QoS is unreliable, chunks generated while transmission is stopped are not transmitted, but chunks generated after the transmission has been restarted are transmitted in real time. On the other hand, with respect to a data stream whose QoS is reliable, chunks generated while transmission is stopped and chunks generated after the transmission has been restarted are transmitted. In this way, the transmission of the data stream can be restarted in a manner that corresponds to the QoS of the data stream.

Moreover, a downstream chunk contains upstream information, and thus client device 20B can recognize information about upstream communication between client device 20A and server device 30, and can determine from which data stream in the upstream transmission the chunk transmitted in downstream transmission were transmitted.

### 3. Modifications

The present disclosure is not limited to the above-described embodiment. The above-described embodiment may be modified as in the following modifications. In addition, two or more of the following modifications may be implemented in combination.

In the above-described embodiment, the data structure of a data stream is not limited to the data structure shown in FIG. 3. The data structure of a data stream may be any data structure as long as it can transmit data in a streaming format.

In the above-described embodiment, the hardware configuration of data communication system 1 is not limited to the examples described with reference to the above-described embodiment. Client device 20 and server device 30 may be configured to include one or more of the above-described hardware configurations, or may be configured without some of the hardware configurations.

In the above-described embodiment, the means for realizing the functions of data communication system 1 are not limited to the examples explained in the above-described embodiment. Some of the functions of server device 30 may be realized by client device 20. Some of the functions of client device 20 may be realized by server device 30. Each functional configuration may be realized by one device, or by two or more devices connected to each other. Processors 21 and 31 of client device 20 and server device 30 may be implemented in at least one of the following types of hardware: microprocessor, DSP (Digital Signal Processor), ASIC (Application Specific Integrated Circuit), PLD (Programmable Logic Device), FPGA (Field Programmable Gate Array), and the like, and this hardware may realize some or all of the functional configurations.

The steps of processing performed in data communication system 1 are not limited to the examples explained in the above-described embodiment. The steps of this processing may be interchanged as long as no contradiction arises. Another aspect of the present disclosure may be provided as a method that includes processing steps that are performed in data communication system 1.

The present disclosure may also be provided as a program that is executed in client device 20 or server device 30. The program may be downloaded via a communication line such as the Internet. The program may also be provided as recorded on a computer-readable recording medium, such as a magnetic recording medium (magnetic tape, magnetic disk, etc.), optical recording medium (optical disk, etc.), optical magnetic recording medium, or semiconductor memory.

### Appendix 1

A program for causing a computer to execute a communication step of performing communication in a streaming format with a client device, wherein the communication step includes a receiving step of receiving a plurality of data streams from a first client device, the plurality of data streams has different transmission conditions, and each of the plurality of data streams includes at least one data point that corresponds to the transmission condition of the data stream.

### Appendix 2

A program for causing a computer to execute a communication step of performing communication in a streaming format with a client device, wherein the communication step includes a receiving step of receiving a data stream from a first client device, the data stream has a transmission condition, and when reception of a first data block included in the data stream is not confirmed, the first data block is re-transmitted from the first client device at a timing that differs depending on the transmission condition of the data stream.

### Appendix 3

A program for causing a computer to execute a communication step of performing communication in a streaming format with a client device, wherein the communication in the streaming format is performed using a data block, the communication step includes a receiving step of receiving a data stream from a first client device, and a transmitting step of transmitting the data stream to a second client device, the data block contains a sequence number consecutive in order of transmission from the first client device, data loss on a first communication path between the computer and the first client device or the second client device is determined based on presence or absence of an acknowledgment that is returned in response to reception of the data block, and data loss on a second communication path from the first client device to the second client device via the computer is determined using the sequence number.

### Appendix 4

A program for causing a computer to execute a communication step of performing communication in a streaming format with a client device, wherein the communication in the streaming format is performed using a data block that contains a data group, the data group contains data-type information, the client device includes a first client device configured to transmit a data stream to the computer, and a second client device configured to receive the data stream transferred from the computer, the communication step includes: a transmitting step of transmitting, in the communication between the first client device and the computer, a first dictionary used for conversion between the data-type information and a first alias value, to the first client device; and a receiving step of receiving, in the communication between the computer and the second client device, a second dictionary used for conversion between the data-type information and a second alias value, from the second client device.

### Appendix 5

A program for causing a computer to execute a communication step of performing communication in a streaming format with a client device, wherein the communication step includes a receiving step of receiving a plurality of data streams from a first client device, the plurality of data streams include: a first data stream that has a first transmission condition that prioritizes real-time performance in data transmission; and a second data stream that has a second transmission condition that prioritizes integrity in data transmission, when transmission of the first data stream from the first client device is stopped according to a bandwidth of a communication path between the computer and the first client device and then the transmission is restarted, the transmission of the first data stream is performed from a data portion that corresponds to a point in time when the transmission is restarted, and when transmission of the second data stream from the first client device is stopped according to the bandwidth and then the transmission is restarted, the transmission of the second data stream is performed from a data portion that corresponds to a point in time when the transmission is stopped.

### Appendix 6

A program for causing a computer to execute a communication step of performing communication in a streaming format with a client device, wherein the communication step includes a receiving step of receiving a data stream from a first client device, and a transmitting step of transmitting the data stream to a second client device, and the program is configured to cause the computer further to execute an adding step of adding information regarding communication between the computer and the first client device to the data block included in the data stream received in the receiving step.

## Claims

1. A program for causing a computer
to execute a communication step of performing communication in a streaming format with a client device,
wherein the communication in the streaming format is performed using a data block that contains a plurality of data groups, and
each of the plurality of data groups contains data-type information and at least one data point that is associated with the data-type information and that is acquired by the client device,
wherein the communication step includes a receiving step of receiving a plurality of data streams from a first client device,
the plurality of data streams has different transmission conditions, and
each of the plurality of data streams includes at least one data point that corresponds to a transmission condition of each data stream.

2. The program according to claim 1
wherein the communication step includes a receiving step of receiving a plurality of data streams from a first client device, and
an amount of data in the data block included in each of the plurality of data streams differs depending on the plurality of data streams.

3. The program according to any one of claims 1 to 2,
wherein the communication step includes a receiving step of receiving a data stream from a first client device,
the data stream has a transmission condition, and
when reception of a first data block included in the data stream is not confirmed, the first data block is re-transmitted from the first client device at a timing that differs depending on the transmission condition of the data stream.

4. The program according to any one of claims 1 to 3,
wherein the communication step includes a receiving step of receiving a data stream from a first client device, and a transmitting step of transmitting the data stream to a second client device,
the data block contains a sequence number consecutive in order of transmission of the data block from the first client device,
data loss on a first communication path between the computer and the first client device or the second client device is determined based on presence or absence of an acknowledgment that is returned in response to reception of the data block, and
data loss on a second communication path from the first client device to the second client device via the computer is determined using the sequence number.

5. The program according to any one of claims 1 to 4,
wherein the client device includes a first client device configured to transmit a data stream to the computer, and a second client device configured to receive the data stream transferred from the computer,
the communication step includes:
a transmitting step of transmitting, in the communication between the first client device and the computer, a first dictionary used for conversion between the data-type information and a first alias value, to the first client device; and
a receiving step of receiving, in the communication between the computer and the second client device, a second dictionary used for conversion between the data-type information and a second alias value, from the second client device.

6. The program according to any one of claims 1 to 5,
wherein the communication step includes a receiving step of receiving a plurality of data streams from a first client device,
the plurality of data streams include: a first data stream that has a first transmission condition that prioritizes real-time performance in data transmission; and a second data stream that has a second transmission condition that prioritizes integrity in data transmission,
when transmission of the first data stream from the first client device is stopped according to a bandwidth of a communication path between the computer and the first client device and then the transmission is restarted, the transmission of the first data stream is performed from a data portion that corresponds to a point in time when the transmission is restarted, and
when transmission of the second data stream from the first client device is stopped according to the bandwidth and then the transmission is restarted, the transmission of the second data stream is performed from a data portion that corresponds to a point in time when the transmission is stopped.

7. The program according to any one of claims 1 to 6,
wherein the communication step includes a receiving step of receiving a data stream from a first client device, and
the program is configured to cause the computer
to further execute an adding step of adding information regarding communication between the computer and the first client device to the data block included in the data stream received in the receiving step.

8. A server device comprising:
a communication means for performing communication in a streaming format with a client device,
wherein the communication in the streaming format is performed using a data block that contains a plurality of data groups, and
each of the plurality of data groups contains data-type information and at least one data point that is associated with the data-type information and that is acquired by the client device,
wherein the communication in a streaming format also includes a receiving step of receiving a plurality of data streams from a first client device,
the plurality of data streams has different transmission conditions, and
each of the plurality of data streams includes at least one data point that corresponds to a transmission condition of each data stream.

9. A data stream transmission method comprising:
a communication step of performing communication in a streaming format with a client device,
wherein the communication in a streaming format is performed using a data block that contains a plurality of data groups, and
each of the plurality of data groups contains data-type information and at least one data point that is associated with the data-type information and that is acquired by the client device,
wherein the communication in a streaming format also includes a receiving step of receiving a plurality of data streams from a first client device,
the plurality of data streams has different transmission conditions, and
each of the plurality of data streams includes at least one data point that corresponds to a transmission condition of each data stream.

## Patentansprüche

1. Programm zum Veranlassen eines Computers,
einen Kommunikationsschritt zum Durchführen einer Kommunikation in einem Streaming-Format mit einer Client-Vorrichtung auszuführen,
wobei die Kommunikation in dem Streaming-Format unter Verwendung eines Datenblocks durchgeführt wird, der eine Vielzahl von Datengruppen enthält, und
jede der Vielzahl von Datengruppen Datentypinformationen und mindestens einen Datenpunkt enthält, der den Datentypinformationen zugeordnet ist und von der Client-Vorrichtung erfasst wird,
wobei der Kommunikationsschritt einen Empfangsschritt zum Empfangen einer Vielzahl von Datenströmen von einer ersten Client-Vorrichtung beinhaltet,
die Vielzahl von Datenströmen unterschiedliche Übertragungsbedingungen aufweist und
jeder der Vielzahl von Datenströmen mindestens einen Datenpunkt beinhaltet, der einer Übertragungsbedingung des jeweiligen Datenstroms entspricht.

2. Programm nach Anspruch 1,
wobei der Kommunikationsschritt einen Empfangsschritt zum Empfangen einer Vielzahl von Datenströmen von einer ersten Client-Vorrichtung beinhaltet und
sich eine Datenmenge in dem in jedem der Vielzahl von Datenströmen enthaltenen Datenblock in Abhängigkeit von der Vielzahl von Datenströmen unterscheidet.

3. Programm nach einem der Ansprüche 1 bis 2,
wobei der Kommunikationsschritt einen Empfangsschritt zum Empfangen eines Datenstroms von einer ersten Client-Vorrichtung beinhaltet,
der Datenstrom eine Übertragungsbedingung aufweist und,
wenn der Empfang eines in dem Datenstrom enthaltenen ersten Datenblocks nicht bestätigt wird, der erste Datenblock zu einem Zeitpunkt, der sich in Abhängigkeit von der Übertragungsbedingung des Datenstroms unterscheidet, erneut von der ersten Client-Vorrichtung übertragen wird.

4. Programm nach einem der Ansprüche 1 bis 3,
wobei der Kommunikationsschritt einen Empfangsschritt zum Empfangen eines Datenstroms von einer ersten Client-Vorrichtung und einen Sendeschritt zum Senden des Datenstroms an eine zweite Client-Vorrichtung beinhaltet,
der Datenblock eine in der Reihenfolge der Übertragung des Datenblocks von der ersten Client-Vorrichtung fortlaufende Sequenznummer enthält,
ein Datenverlust auf einem ersten Kommunikationspfad zwischen dem Computer und der ersten Client-Vorrichtung oder der zweiten Client-Vorrichtung auf der Grundlage des Vorhandenseins oder Nichtvorhandenseins einer Empfangsbestätigung bestimmt wird, die als Reaktion auf den Empfang des Datenblocks zurückgesendet wird, und
ein Datenverlust auf einem zweiten Kommunikationspfad von der ersten Client-Vorrichtung über den Computer zu der zweiten Client-Vorrichtung unter Verwendung der Sequenznummer bestimmt wird.

5. Programm nach einem der Ansprüche 1 bis 4,
wobei die Client-Vorrichtung eine erste Client-Vorrichtung, die zum Senden eines Datenstroms an den Computer konfiguriert ist, und eine zweite Client-Vorrichtung beinhaltet, die zum Empfangen des von dem Computer weitergeleiteten Datenstroms konfiguriert ist,
wobei der Kommunikationsschritt Folgendes beinhaltet:
einen Sendeschritt zum Senden, bei der Kommunikation zwischen der ersten Client-Vorrichtung und dem Computer, eines ersten Wörterbuchs, das zur Umwandlung zwischen den Datentypinformationen und einem ersten Aliaswert verwendet wird, an die erste Client-Vorrichtung:
und einen Empfangsschritt zum Empfangen, bei der Kommunikation zwischen dem Computer und der zweiten Client-Vorrichtung, eines zweiten Wörterbuchs, das zur Umwandlung zwischen den Datentypinformationen und einem zweiten Aliaswert verwendet wird, von der zweiten Client-Vorrichtung.

6. Programm nach einem der Ansprüche 1 bis 5,
wobei der Kommunikationsschritt einen Empfangsschritt zum Empfangen einer Vielzahl von Datenströmen von einer ersten Client-Vorrichtung beinhaltet,
wobei die Vielzahl von Datenströmen Folgendes beinhaltet: einen ersten Datenstrom, der eine erste Übertragungsbedingung aufweist, die Echtzeitfähigkeit bei der Datenübertragung priorisiert; und einen zweiten Datenstrom, der eine zweite Übertragungsbedingung aufweist, die Integrität bei der Datenübertragung priorisiert, wobei,
wenn die Übertragung des ersten Datenstroms von der ersten Client-Vorrichtung in Abhängigkeit von einer Bandbreite eines Kommunikationspfads zwischen dem Computer und der ersten Client-Vorrichtung gestoppt und die Übertragung anschließend wieder aufgenommen wird, die Übertragung des ersten Datenstroms ab einem Datenabschnitt durchgeführt wird, der einem Zeitpunkt entspricht, zu dem die Übertragung wieder aufgenommen wird, und,
wenn die Übertragung des zweiten Datenstroms von der ersten Client-Vorrichtung in Abhängigkeit von der Bandbreite gestoppt und die Übertragung anschließend wieder aufgenommen wird, die Übertragung des zweiten Datenstroms ab einem Datenabschnitt durchgeführt wird, der einem Zeitpunkt entspricht, zu dem die Übertragung gestoppt wird.

7. Programm nach einem der Ansprüche 1 bis 6,
wobei der Kommunikationsschritt einen Empfangsschritt zum Empfangen eines Datenstroms von einer ersten Client-Vorrichtung beinhaltet und
das Programm dazu konfiguriert ist, den Computer veranlassen,
ferner einen Hinzufügungsschritt zum Hinzufügen von Informationen bezüglich einer Kommunikation zwischen dem Computer und der ersten Client-Vorrichtung zu dem Datenblock auszuführen, der in dem in dem Empfangsschritt empfangenen Datenstrom beinhaltet ist.

8. Servervorrichtung, umfassend:
ein Kommunikationsmittel zum Durchführen einer Kommunikation in einem Streaming-Format mit einer Client-Vorrichtung,
wobei die Kommunikation in dem Streaming-Format unter Verwendung eines Datenblocks durchgeführt wird, der eine Vielzahl von Datengruppen enthält, und
jede der Vielzahl von Datengruppen Datentypinformationen und mindestens einen Datenpunkt enthält, der den Datentypinformationen zugeordnet ist und von der Client-Vorrichtung erfasst wird,
wobei die Kommunikation in einem Streaming-Format auch einen Empfangsschritt zum Empfangen einer Vielzahl von Datenströmen von einer ersten Client-Vorrichtung umfasst,
die Vielzahl von Datenströmen unterschiedliche Übertragungsbedingungen aufweist und
jeder der Vielzahl von Datenströmen mindestens einen Datenpunkt beinhaltet, der einer Übertragungsbedingung jedes Datenstroms entspricht.

9. Datenstromübertragungsverfahren, umfassend:
einen Kommunikationsschritt zum Durchführen einer Kommunikation in einem Streaming-Format mit einer Client-Vorrichtung,
wobei die Kommunikation in einem Streaming-Format unter Verwendung eines Datenblocks durchgeführt wird, der eine Vielzahl von Datengruppen enthält, und
jede der Vielzahl von Datengruppen Datentypinformationen und mindestens einen Datenpunkt enthält, der den Datentypinformationen zugeordnet ist und von der Client-Vorrichtung erfasst wird,
wobei die Kommunikation in einem Streaming-Format auch einen Empfangsschritt zum Empfangen einer Vielzahl von Datenströmen von einer ersten Client-Vorrichtung umfasst,
die Vielzahl von Datenströmen unterschiedliche Übertragungsbedingungen aufweist und
jeder der Vielzahl von Datenströmen mindestens einen Datenpunkt beinhaltet, der einer Übertragungsbedingung des jeweiligen Datenstroms entspricht.

## Revendications

1. Programme destiné à amener un ordinateur à exécuter une étape de communication consistant à effectuer une communication dans un format de diffusion en continu avec un dispositif client,
dans lequel la communication dans le format de diffusion en continu est effectuée à l'aide d'un bloc de données qui contient une pluralité de groupes de données, et
chacun de la pluralité de groupes de données contient des informations de type de données et au moins un point de données qui est associé aux informations de type de données et qui est acquis par le dispositif client,
dans lequel l'étape de communication comprend une étape de réception consistant à recevoir une pluralité de flux de données en provenance d'un premier dispositif client,
la pluralité de flux de données présentant des conditions de transmission différentes, et
chacun de la pluralité de flux de données comprend au moins un point de données qui correspond à une condition de transmission de chaque flux de données.

2. Programme selon la revendication 1,
dans lequel l'étape de communication comprend une étape de réception consistant à recevoir une pluralité de flux de données en provenance d'un premier dispositif client, et
une quantité de données dans le bloc de données compris dans chacun de la pluralité de flux de données diffère en fonction de la pluralité de flux de données.

3. Programme selon l'une quelconque des revendications 1 à 2,
dans lequel l'étape de communication comprend une étape de réception consistant à recevoir un flux de données en provenance d'un premier dispositif client,
le flux de données présente une condition de transmission, et
lorsque la réception d'un premier bloc de données compris dans le flux de données n'est pas confirmée, le premier bloc de données est retransmis depuis le premier dispositif client à un moment qui diffère en fonction de la condition de transmission du flux de données.

4. Programme selon l'une quelconque des revendications 1 à 3,
dans lequel l'étape de communication comprend une étape de réception consistant à recevoir un flux de données en provenance d'un premier dispositif client, et une étape de transmission consistant à transmettre le flux de données à un deuxième dispositif client,
le bloc de données contient un numéro de séquence consécutif selon l'ordre de transmission du bloc de données provenant du premier dispositif client,
une perte de données sur un premier trajet de communication entre l'ordinateur et le premier dispositif client ou le deuxième dispositif client est déterminée sur la base de la présence ou de l'absence d'un accusé de réception qui est renvoyé en réponse à la réception du bloc de données, et
une perte de données sur un deuxième trajet de communication allant du premier dispositif client au deuxième dispositif client par l'intermédiaire de l'ordinateur est déterminée à l'aide du numéro de séquence.

5. Programme selon l'une quelconque des revendications 1 à 4,
dans lequel le dispositif client comprend un premier dispositif client configuré pour transmettre un flux de données à l'ordinateur, et un deuxième dispositif client configuré pour recevoir le flux de données transféré depuis l'ordinateur,
l'étape de communication comprenant :
une étape de transmission consistant à transmettre, lors de la communication entre le premier dispositif client et l'ordinateur, un premier dictionnaire utilisé pour une conversion entre les informations de type de données et une première valeur d'alias, au premier dispositif client ; et
une étape de réception consistant à recevoir, lors de la communication entre l'ordinateur et le deuxième dispositif client, un deuxième dictionnaire utilisé pour une conversion entre les informations de type de données et une deuxième valeur d'alias, en provenance du deuxième dispositif client.

6. Programme selon l'une quelconque des revendications 1 à 5,
dans lequel l'étape de communication comprend une étape de réception consistant à recevoir une pluralité de flux de données en provenance d'un premier dispositif client,
la pluralité de flux de données comprenant : un premier flux de données qui présente une première condition de transmission qui donne la priorité aux performances en temps réel dans la transmission de données ; et un deuxième flux de données qui présente une deuxième condition de transmission qui donne la priorité à l'intégrité dans la transmission de données,
lorsque la transmission du premier flux de données depuis le premier dispositif client est arrêtée en fonction d'une bande passante d'un trajet de communication entre l'ordinateur et le premier dispositif client, puis que la transmission est redémarrée, la transmission du premier flux de données est effectuée à partir d'une partie de données qui correspond à un point temporel auquel la transmission est redémarrée, et
lorsque la transmission du deuxième flux de données depuis le premier dispositif client est arrêtée en fonction de la bande passante, puis que la transmission est redémarrée, la transmission du deuxième flux de données est effectuée à partir d'une partie de données qui correspond à un point temporel auquel la transmission est arrêtée.

7. Programme selon l'une quelconque des revendications 1 à 6,
dans lequel l'étape de communication comprend une étape de réception consistant à recevoir un flux de données en provenance d'un premier dispositif client, et
le programme est configuré pour amener l'ordinateur
à exécuter en outre une étape d'ajout consistant à ajouter, au bloc de données compris dans le flux de données reçu lors de l'étape de réception, des informations concernant une communication entre l'ordinateur et le premier dispositif client.

8. Dispositif serveur, comprenant :
un moyen de communication destiné à effectuer une communication dans un format de diffusion en continu avec un dispositif client,
dans lequel la communication dans le format de diffusion en continu est effectuée à l'aide d'un bloc de données qui contient une pluralité de groupes de données, et
chacun de la pluralité de groupes de données contient des informations de type de données et au moins un point de données qui est associé aux informations de type de données et qui est acquis par le dispositif client,
dans lequel la communication dans un format de diffusion en continu comprend également une étape de réception consistant à recevoir une pluralité de flux de données en provenance d'un premier dispositif client,
la pluralité de flux de données présentant des conditions de transmission différentes, et
chacun de la pluralité de flux de données comprend au moins un point de données qui correspond à une condition de transmission de chaque flux de données.

9. Procédé de transmission de flux de données, comprenant :
une étape de communication consistant à effectuer une communication dans un format de diffusion en continu avec un dispositif client,
dans lequel la communication dans le format de diffusion en continu est effectuée à l'aide d'un bloc de données qui contient une pluralité de groupes de données, et
chacun de la pluralité de groupes de données contient des informations de type de données et au moins un point de données qui est associé aux informations de type de données et qui est acquis par le dispositif client,
dans lequel la communication dans un format de diffusion en continu comprend également une étape de réception consistant à recevoir une pluralité de flux de données en provenance d'un premier dispositif client,
la pluralité de flux de données présentant des conditions de transmission différentes, et
chacun de la pluralité de flux de données comprend au moins un point de données qui correspond à une condition de transmission de chaque flux de données.
